# EUROPÄISCHE PATENTSCHRIFT

(11) **EP 2 273 137 B1**
(45) Veröffentlichungstag und Bekanntmachung des Hinweises auf die Patenterteilung: **21.03.2012**
(21) Anmeldenummer: 10168203.7
(22) Anmeldetag: 02.07.2010
(51) Int. Cl.: F16C 7/02, F16C 35/06

(54) **Pleuel und Verfahren zu seiner Herstellung**
Connecting rod and method for its production
Bielle et son procédé de fabrication

(43) Veröffentlichungstag der Anmeldung: 12.01.2011
(73) Patentinhaber: Aktiebolaget SKF, 41 550 Göteborg (SE)
(72) Erfinder: Hain, Steffen, 97753 Karlstadt (DE); Pickel, Edgar, 97334 Sommerach (DE); Horling, Peter, 97453 Schonungen (DE); Kern, Henning, 97080 Würzburg (DE); Kern-Trautmann, Andreas, 97230 Estenfeld (DE)
(74) Vertreter: Schonecke, Mitja

(56) Entgegenhaltungen:
- DE-A1- 1 400 226
- DE-A1- 10 124 843
- DE-A1- 10 355 363

## Beschreibung

Die Erfindung betrifft ein Pleuel sowie ein Verfahren zu seiner Herstellung.

Pleuel sind im Stand der Technik hinlänglich bekannt. Sie dienen zur Übertragung von Kräften entlang der Pleuellängsachse, wobei in der Regel eine Umsetzung einer translatorischen Bewegung in eine Längsbewegung bewerkstelligt wird.

Damit dieses in hinreichender Gleichförmigkeit erfolgen kann, muss das Pleuel samt seiner Lagerung eine ausreichende Fertigungsqualität aufweisen. Dies bedingt in der Regel aber entsprechend hohe Fertigungskosten. In einen Grundkörper sind Aufnahmebohrungen für Lagerelemente einzubringen, die als Wälz- oder Gleitlager ausgebildet sein können. Die Gleichförmigkeit der Umsetzung der Bewegung hängt auch davon an, wie präzise die Lagerachsen durch das Pleuel auf Abstand gehalten werden.

Die Lager, z. B. Wälzlager, können dabei in der Regel nur in begrenzter Weise thermischen Einflüssen während der Herstellung des Pleuels ausgesetzt werden. Damit entfällt beispielsweise die Möglichkeit, die Lager in einem Pleuelgrundkörper durch einen Spritzgießvorgang lagegenau zu fixieren.

Der Erfindung liegt daher die **Aufgabe** zu Grunde, ein Pleuel sowie ein Verfahren zu seiner Herstellung vorzuschlagen, das sich durch eine präzise Anordnung der Lager in einem Pleuelgrundkörper auszeichnet, ohne dass das Lager während der Herstellung einer hohen Belastung, insbesondere eine hohen thermischen Belastung, ausgesetzt ist. Die Herstellung des Pleuels soll dabei in kosteneffizienter Weise erfolgen können, so dass auf eine übermäßig präzise Herstellung der Einzelteile des Pleuels verzichtet werden kann.

Die **Lösung** dieser Aufgabe durch die Erfindung ist dadurch gekennzeichnet, dass das Pleuel einen Grundkörper umfasst, der an zwei beabstandeten Orten eine kreisförmige Ausnehmung aufweist, wobei in zumindest einer der kreisförmigen Öffnungen eine ringförmige Hülse angeordnet ist, wobei die ringförmige Hülse durch Einspritzen eines spritzgießfähigen Materials zwischen den Innenumfang der Ausnehmung und den Außenumfang der ringförmigen Hülse mit dem Grundkörper stoffschlüssig verbunden ist, und wobei in die ringförmige Hülse ein Lager eingesetzt ist.

Der Grundkörper ist nach einer Ausführungsform der Erfindung als einteiliges, massives Teil ausgeführt. Dabei kommt bevorzugt ein Leichtmetall, insbesondere Aluminium, zum Einsatz.

Alternativ kann auch vorgesehen sein, dass der Grundkörper aus mindestens zwei Teilen zusammengesetzt ist, die miteinander verbunden sind. Die beiden Teile können durch einen Verformungsvorgang des Materials der Teile miteinander verbunden sein. Der Grundkörper besteht auch in diesem Falle aus Metall, insbesondere aus Blech.

Der Grundkörper kann ein Zentriermittel, insbesondere mindestens eine Zentrierbohrung, aufweisen; die Zentriermittel dienen zum exakten Positionieren des Grundkörpers in einem Spritzgießwerkzeug.

Die ringförmige Hülse ist bevorzugt an einer Umfangsstelle geschlitzt ausgeführt. Sie kann aus einem gebogenen Blechstreifen bestehen.

Die Oberfläche der ringförmigen Hülse kann zumindest teilweise mit einer reibungserhöhenden Beschichtung versehen sein, um die axiale Sicherung zu verbessern. Die reibungserhöhende Beschichtung weist dabei bevorzugt Zink oder Molybdän auf.

Die ringförmige Hülse kann weiterhin Mittel zur Bildung eines axialen Anschlags für den Lageraußenring aufweisen, um diesen axial in der Hülse zu fixieren. Das Lager kann in der ringförmigen Hülse durch einen Verstemmvorgang axial gesichert werden.

Nach einer Ausgestaltung der Erfindung ist in beide ringförmigen Hülsen je ein Lager eingesetzt.

Es ist alternativ aber auch möglich, dass nur in eine der ringförmigen Hülsen ein Lager eingesetzt ist und dass in die andere ringförmige Hülse ein Bolzen eingesetzt ist. Gegebenenfalls können auch beide Lagerstellen mittels Bolzen ausgeführt sein. Der Bolzen kann an seinen axialen Enden mit je einer Gleitbuchse versehen sein.

Als spritzgießfähiges Material kommt bevorzugt Kunststoff zum Einsatz. Es wäre aber auch denkbar, dass hierfür Leichtmetalle verwendet werden.

Das vorgeschlagene Verfahren zum Herstellen eines Pleuels weist folgende Schritte auf:
a) Herstellen eines Grundkörpers, wobei an zwei beanstandeten Orten eine kreisförmige Ausnehmung eingearbeitet wird;
b) Einsetzen des Grundkörpers in ein Spritzgießwerkzeug;
c) Einsetzen je einer ringförmigen Hülse in die kreisförmigen Ausnehmungen;
d) Einspritzen eines spritzgießfähigen Materials in den Raum zwischen den Innenumfang der Ausnehmung und den Außenumfang der ringförmigen Hülse;
e) Entformen des Grundkörpers samt stoffschlüssig verbundener ringförmigen Hülsen aus dem Spritzgießwerkzeug;
f) Einsetzen eines Lagers in mindestens eine der ringförmigen Hülsen.

Der Grundkörper und die ringförmigen Hülsen können dabei vor der Durchführung des Schritts d) im Spritzgießwerkzeug zueinander zentriert werden. Das Lager kann nach der Durchführung des Schritts f) durch einen Verstemmvorgang relativ zur ringförmigen Hülse axial gesichert werden. Gemäß Schritt d) wird vorzugsweise Kunststoffschmelze eingespritzt.

In vorteilhafter Weise werden die Lager so keinerlei thermischer Belastung ausgesetzt, die ansonsten beim Umspritzen der ringförmigen Hülsen in den Grundkörper auftreten würde.

Vorteilhaft ist weiterhin, dass die Fertigungsungenauigkeiten des Grundkörpers unbedeutend sind, da durch die exakte Ausrichtung der ringförmigen Hülsen im Grundkörper vor dem Einspritzen des spritzgießfähigen Materials derartige Ungenauigkeiten eliminiert werden. Demgemäß muss die Vorbearbeitung des Grundkörpers nicht besonders genau erfolgen, was die Herstellkosten wesentlich reduziert. Das spritzgießfähige Material gleicht ungenaue Positionen, Unrundheiten der Aufnahmen und Größenunterschiede problemlos aus.

Durch eine dünne Ausführung der ringförmigen Hülsen (z. B. hergestellt aus einem gebogenen Blechstreifen) bleibt der Außenring des Lagers rund.

Das spritzgießfähige Material ist dabei so gewählt, dass beispielsweise im Falle eines Elastomennaterials (Kunststoffmaterials) die Härte (Shore-Härte) derart groß ist, dass eine hinreichende axiale Verschiebefestigkeit zwischen der ringförmigen Hülse und dem Grundkörper vorliegt.

Zur axialen Sicherung trägt auch bei, wenn die ringförmige Hülse mit einer reibungserhöhenden Beschichtung versehen ist.

In der Zeichnung sind Ausführungsbeispiele der Erfindung dargestellt. Es zeigen:
- Fig. 1: eine perspektivische Ansicht eines Pleuels gemäß einer ersten Ausfüh- rungsform der Erfindung, wobei das Pleuel zwei Wälzlager aufweist, die in einem Grundkörper angeordnet sind,
- Fig. 2: eine Explosionsdarstellung des Pleuels gemäß Fig. 1,
- Fig. 3: die Draufsicht auf das Pleuel gemäß Fig. 1,
- Fig. 4: den Schnitt A-A gemäß Fig. 3,
- Fig. 5: den Schnitt B-B gemäß Fig. 3,
- Fig. 6: das Detail "X" gemäß Fig. 4,
- Fig. 7: eine perspektivische Ansicht eines Pleuels gemäß einer zweiten Ausfüh- rungsform der Erfindung, wobei das Pleuel zwei Wälzlager aufweist, die in einem Grundkörper angeordnet sind,
- Fig. 8: eine Explosionsdarstellung des Pleuels gemäß Fig. 7,
- Fig. 9: die Draufsicht auf das Pleuel gemäß Fig. 7,
- Fig. 10: den Schnitt A-A gemäß Fig. 9,
- Fig. 11: den Schnitt B-B gemäß Fig. 9,
- Fig. 12: das Detail "Y" gemäß Fig. 10,
- Fig. 13: eine Explosionsdarstellung eines Pleuels gemäß einer dritten Ausfüh- rungsform der Erfindung, wobei das Pleuel hier ein Wälzlager und einen Lagerbolzen aufweist, die in einem Grundkörper angeordnet sind, sowie einen das Pleuel tragenden Kolben,
- Fig. 14: einen Radialschnitt durch den Kolben samt Pleuel gemäß Fig. 13,
- Fig. 15: das Detail "Z" gemäß Fig. 14 und
- Fig. 16: den Schnitt B-B gemäß Fig. 14.

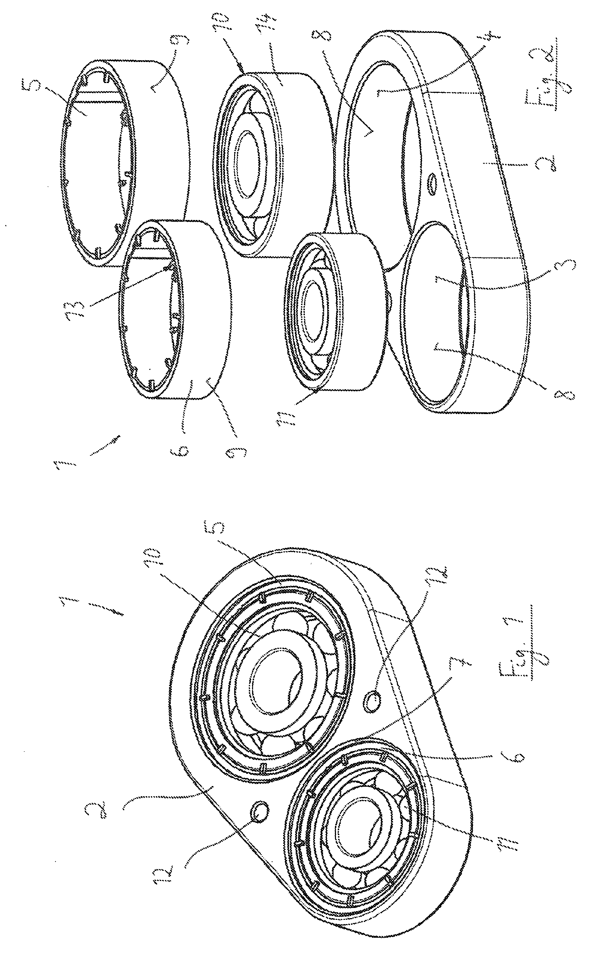

In den Figuren 1 bis 6 ist ein erstes Ausführungsbeispiel eines Pleuels 1 dargestellt. Das Pleuel 1 hat einen Grundkörper 2, der hier als massives Teil ausgebildet ist, z. B. aus Aluminium. In den Grundkörper 2 sind kreisförmige Ausnehmungen 3 und 4 (Bohrungen) eingearbeitet, und zwar in genau vorgegebenem Abstand, der sich aus dem gewünschten Einsatzzweck des Pleuels 1 ergibt.

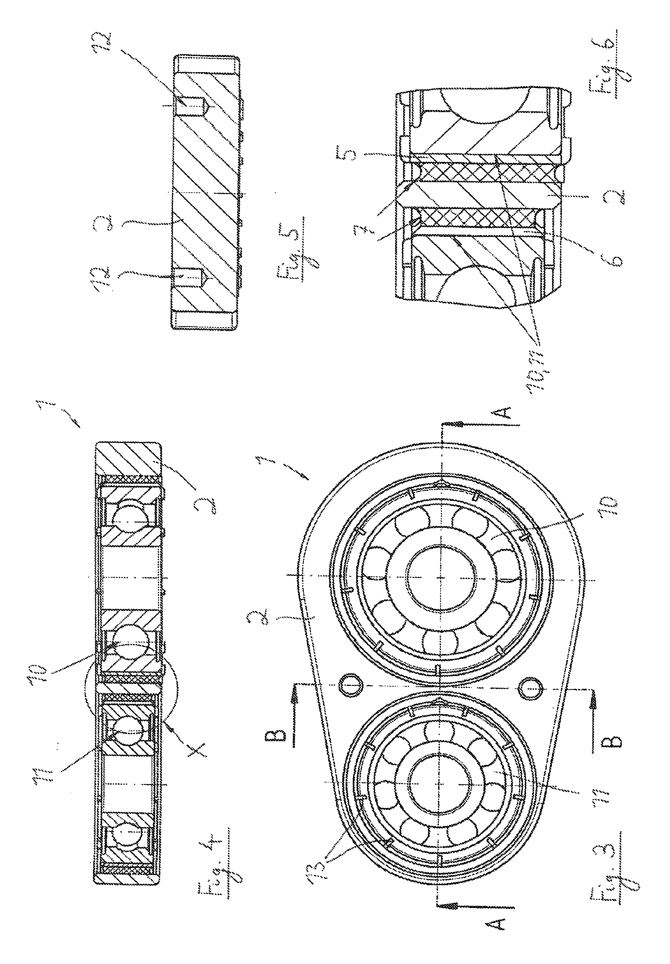

Wie sich aus der Explosionsdarstellung gemäß Fig. 2 sowie aus den Schnittdarstellungen gemäß den Figuren 4 bis 6 ergibt, sind ringförmige Hülsen 5 und 6 in die Ausnehmungen 3 und 4 eingesetzt. Diese sind in den Ausnehmungen mittels eines Spritzgießprozesses stoffschlüssig festgelegt. Hierzu wurde der Grundkörper 2 in ein (nicht dargestelltes) Spritzgießwerkzeug eingelegt und mittels geeigneter Zentrierelemente in diesem ausgerichtet. Vorliegend sind - s. Fig. 5 - zwei Zentrierbohrungen 12 vorgesehen, die den Grundkörper 2 im Spritzgießwerkzeug aufnehmen. Die beiden ringförmigen Hülsen 5 und 6 werden in die Ausnehmungen 3, 4 eingesetzt und gleichermaßen an geeigneten Zentrierelementen ausgerichtet, so dass die relative Lage zwischen den beiden ringförmigen Hülsen 5, 6 und dem Grundkörper 2 im Spritzgießwerkzeug exakt vorliegt.

Dann wird ein spritzgießfähiges Material 7 zwischen den Innenumfang 8 der Ausnehmung 3, 4 und den Außenumfang der ringförmigen Hülse 5, 6 eingespritzt und die ringförmigen Hülsen 5, 6 so stoffschlüssig am Grundkörper 2 angebunden. Die ringförmigen Hülsen 5, 6 weisen dabei an einer Umfangsstelle einen Schlitz auf, der durch Einarbeiten des Schlitzes oder durch Sprengen der Hülse erzeugt sein kann. Durch die Schlitzung erhält die ringförmige Hülse 5, 6 eine gewisse radiale Elastizität.

Nach der Einspritzung der ringförmigen Hülsen 5, 6 in den Grundkörper 2 werden in die ringförmigen Hülsen 5, 6, die nunmehr ungeachtet vorher vorhandener Fertigungstoleranzen bei der Vorfertigung der einzelnen Bauteile präzise zueinander positioniert sind, Wälzlager 10 und 11 eingesetzt und axial in den ringförmigen Hülsen 5, 6 fixiert. Demgemäß sitzt der Lageraußenring 14 des Lagers 10, 11 mit leichter Presspassung in der ringförmigen Hülse 5, 6.

Die axiale Fixierung zur einen Seite erfolgt durch Mittel 13 zur Bildung eines axialen Anschlags, die vorliegend als stiftartige Fortsätze an der ringförmigen Hülse 5, 6 ausgebildet sind. Die axiale Festlegung zur anderen Seite kann durch einen Verstemmvorgang erfolgen, der radial umlaufend oder nur partiell ausgeführt werden kann.

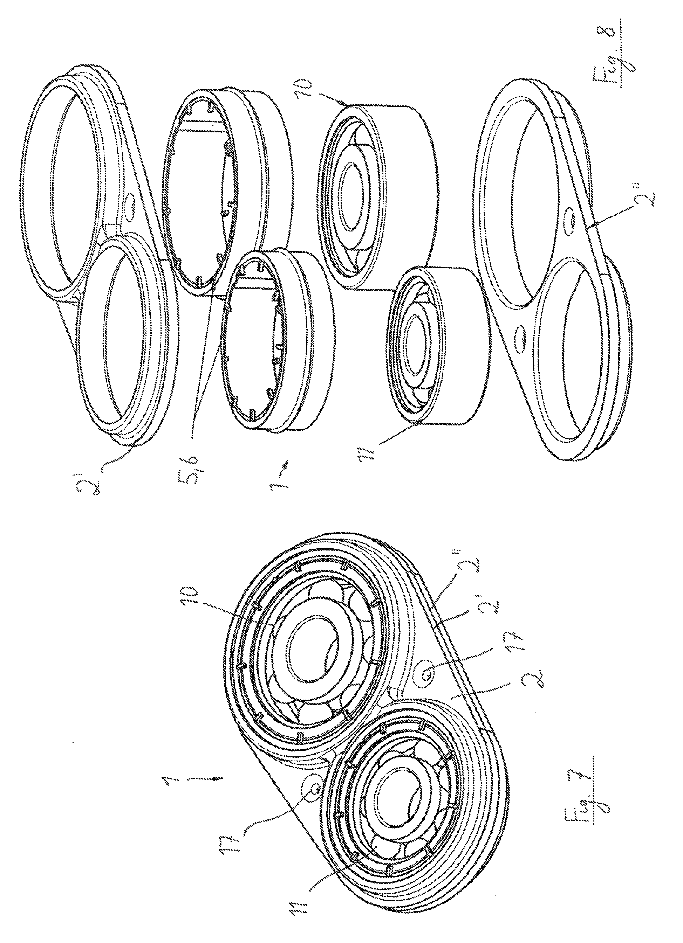

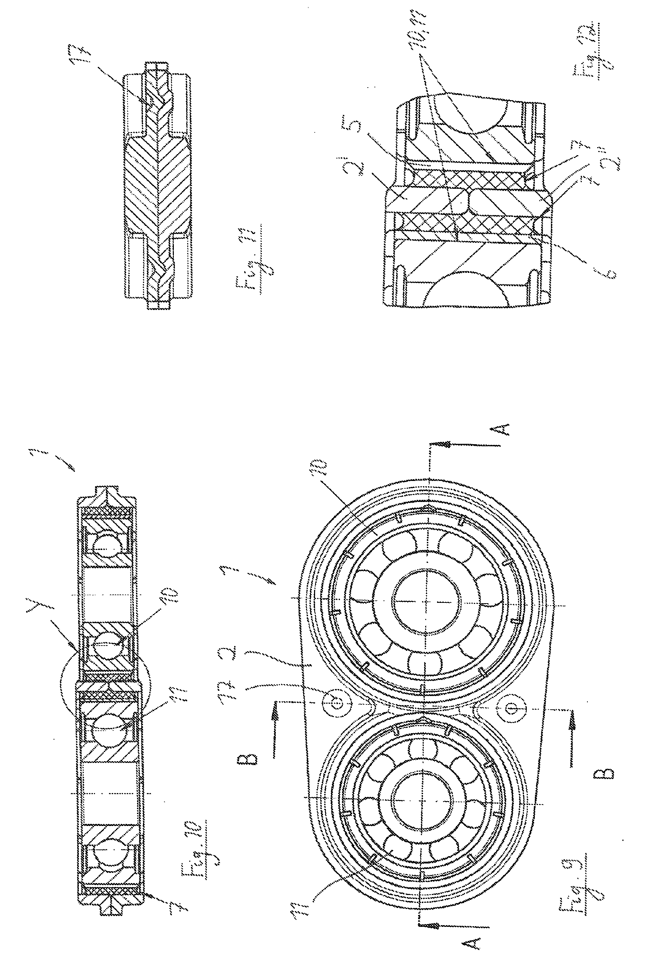

Während im erläuterten Ausführungsbeispiel der Grundkörper als einstückiges Teil gefertigt ist, kann dies auch anders sein. Eine solche Lösung zeigt das Ausführungsbeispiel gemäß den Figuren 7 bis 12.

Hier ist der Grundkörper 2 aus zwei Teilen 2' und 2" zusammengesetzt, die beide aus Blech gefertigt sind. Dabei kommt bevorzugt ein Stanz- und Tiefziehprozess bei der Fertigung der Teile 2', 2" zum Einsatz. Die beiden Teile 2' und 2" sind hier durch eine Verstemmung 17 miteinander verbunden (verclincht). Die hierbei entstehende Eindrückung kann zur Zentrierung des Grundkörpers 2 im Spritzgießwerkzeug verwendet werden.

Der Aufbau entspricht ansonsten demjenigen gemäß dem Ausführungsbeispiel nach den Figuren 1 bis 6; es wurden dieselben Bezugszeichen verwendet.

Betreffend die Ausbildung der ringförmigen Hülsen 5 und 6 in den Figuren 2 und 8 sei noch folgendes angemerkt: Jede der Hülsen 5, 6 ist vorliegend zweiteilig ausgeführt (in den Darstellungen gemäß Figur 2 und Figur 8 sind die beiden Teile 5, 6 zusammengebaut skizziert). Jede der Hülsen 5, 6 besteht aus zwei konzentrischen Teilen, nämlich aus einem inneren ringförmigen Bauteil, das an einer Umfangsstelle geschlitzt ausgeführt ist, und einem dieses Bauteil konzentrisch umgebenden Tragkörper, der eine hohlzylindrische Grundkontur aufweist.

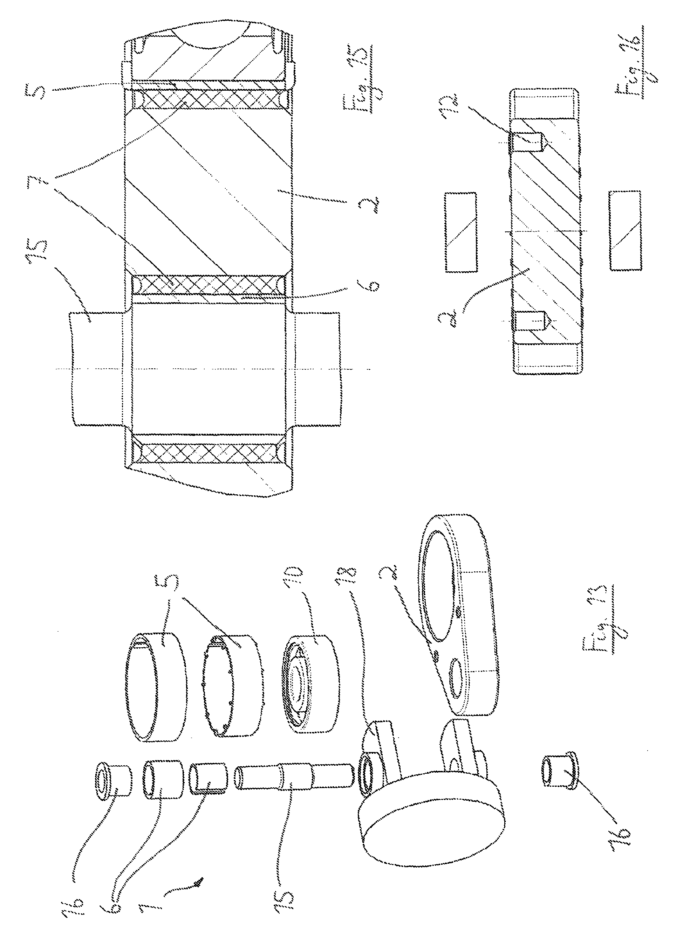

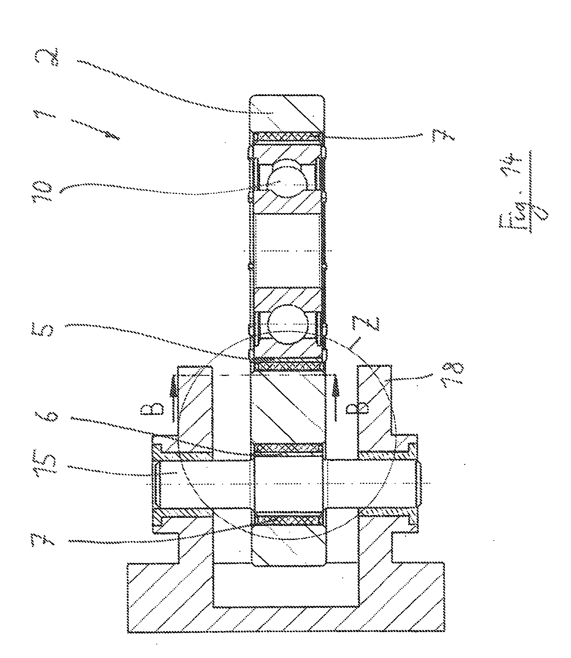

Im dritten Ausführungsbeispiel gemäß den Figuren 13 bis 16 liegt eine weitere Variation vor. Während bei den erstgenannten Ausführungsbeispielen zwei Wälzlager 10, 11 vorgesehen wurden, die durch den Grundkörper 2 des Pleuels 1 auf Abstand gehalten werden, weist das dritte Ausführungsbeispiel nur ein einziges Wälzlager 10 auf. Die andere Lagerstelle wird durch einen Bolzen 15 gebildet, der mit seinem Außenumfang in der ringförmigen Hülse 6 sitzt. Der Bolzen 15 ist an beiden axialen Enden mit einer Gleitbuchse 16 versehen, wodurch der Bolzen in einem Kolben 18 gelagert wird, der in Fig. 13 und 14 dargestellt ist.

Ansonsten entspricht auch die Ausgestaltung der dritten Ausführungsform der vorbeschriebenen Konzeption.

### Bezugszeichenliste

- 1: Pleuel
- 2: Grundkörper
- 2': Teil des Grundkörpers
- 2": Teil des Grundkörpers
- 3: Ausnehmung
- 4: Ausnehmung
- 5: ringförmige Hülse
- 6: ringförmige Hülse
- 7: spritzgießfähiges Material
- 8: Innenumfang der Ausnehmung
- 9: Außenumfang der ringförmigen Hülse
- 10: Lager (Wälzlager)
- 11: Lager (Wälzlager)
- 12: Zentriermittel (Zentrierbohrung)
- 13: Mittel zur Bildung eines axialen Anschlags
- 14: Lageraußenring
- 15: Bolzen
- 16: Gleitbuchse
- 17: Verstemmung
- 18: Kolben

## Patentansprüche

1. Pleuel (1), umfassend
einen Grundkörper (2), der an zwei beabstandeten Orten eine kreisförmige Ausnehmung (3, 4) aufweist,
wobei in zumindest einer der kreisförmigen Öffnungen (3, 4) eine ringförmige Hülse (5, 6) angeordnet ist, wobei die ringförmige Hülse (5, 6) durch Einspritzen eines spritzgießfähigen Materials (7) zwischen den Innenumfang (8) der Ausnehmung (3, 4) und den Außenumfang (9) der ringförmigen Hülse (5, 6) mit dem Grundkörper (2) stoffschlüssig verbunden ist, und
wobei in die ringförmige Hülse (5, 6) ein Lager (10, 11) eingesetzt ist.

2. Pleuel nach Anspruch 1, **dadurch gekennzeichnet, dass** der Grundkörper (2) ein einteiliges, massives Teil ist, wobei der Grundkörper (2) bevorzugt aus Leichtmetall, insbesondere aus Aluminium, besteht.

3. Pleuel nach Anspruch 1, **dadurch gekennzeichnet, dass** der Grundkörper (2) aus mindestens zwei Teilen (2', 2") zusammengesetzt ist, die miteinander verbunden sind, wobei die beiden Teile (2', 2") insbesondere durch einen Verformungsvorgang des Materials der Teile (2', 2") miteinander verbunden sind.

4. Pleuel nach Anspruch 3, **dadurch gekennzeichnet, dass** der Grundkörper (2) aus Metall, insbesondere aus Blech, besteht.

5. Pleuel nach einem der Ansprüche 1 bis 4, **dadurch gekennzeichnet, dass** der Grundkörper (2) ein Zentriermittel (12), insbesondere mindestens eine Zentrierbohrung, aufweist.

6. Pleuel nach einem der Ansprüche 1 bis 5, **dadurch gekennzeichnet, dass** die ringförmige Hülse (5, 6) an einer Umfangsstelle geschlitzt ist, wobei die ringförmige Hülse (5, 6) insbesondere aus einem gebogenen Blechstreifen besteht.

7. Pleuel nach einem der Ansprüche 1 bis 6, **dadurch gekennzeichnet, dass** die Oberfläche der ringförmigen Hülse (5, 6) zumindest teilweise mit einer reibungserhöhenden Beschichtung versehen ist, wobei die reibungserhöhende Beschichtung insbesondere aus Zink oder Molybdän besteht oder dieses Element aufweist.

8. Pleuel nach einem der Ansprüche 1 bis 7, **dadurch gekennzeichnet, dass** die ringförmige Hülse (5, 6) Mittel (13) zur Bildung eines axialen Anschlags für den Lageraußenring (14) aufweist.

9. Pleuel nach einem der Ansprüche 1 bis 8, **dadurch gekennzeichnet, dass** das Lager (10, 11) in der ringförmigen Hülse (5, 6) durch einen Verstemmvorgang axial gesichert ist.

10. Pleuel nach einem der Ansprüche 1 bis 9, **dadurch gekennzeichnet, dass** in eine der ringförmigen Hülsen (5, 6) ein Lager (10, 11) eingesetzt ist und dass in die andere ringförmige Hülse (5, 6) ein Bolzen (15) eingesetzt ist, wobei insbesondere der Bolzen (15) an seinen axialen Enden mit je einer Gleitbuchse (16) versehen ist.

11. Pleuel nach einem der Ansprüche 1 bis 10, **dadurch gekennzeichnet, dass** das spritzgießfähige Material (7) Kunststoff ist.

12. Verfahren zum Herstellen eines Pleuels (1), das die Schritte aufweist:
a) Herstellen eines Grundkörpers (2), wobei an zwei beanstandeten Orten eine kreisförmige Ausnehmung (3, 4) eingearbeitet wird;
b) Einsetzen des Grundkörpers (2) in ein Spritzgießwerkzeug;
c) Einsetzen je einer ringförmigen Hülse (5, 6) in die kreisförmigen Ausnehmungen (3, 4);
d) Einspritzen eines spritzgießfähigen Materials (7) in den Raum zwischen den Innenumfang (8) der Ausnehmung (3, 4) und den Außenumfang (9) der ringförmigen Hülse (5, 6);
e) Entformen des Grundkörpers (2) samt stoffschlüssig verbundener ringförmigen Hülsen (5, 6) aus dem Spritzgießwerkzeug;
f) Einsetzen eines Lagers (10, 11) in mindestens eine der ringförmigen Hülsen (5, 6).

13. Verfahren nach Anspruch 12, **dadurch gekennzeichnet, dass** der Grundkörper (2) und die ringförmigen Hülsen (5, 6) vor der Durchführung des Schritts d) von Anspruch 12 im Spritzgießwerkzeug zueinander zentriert werden.

14. Verfahren nach Anspruch 12 oder 13, **dadurch gekennzeichnet, dass** das Lager (10, 11) nach der Durchführung des Schritts f) von Anspruch 12 durch einen Verstemmvorgang relativ zur ringförmigen Hülse (5, 6) axial gesichert wird.

15. Verfahren nach einem der Ansprüche 12 bis 14, **dadurch gekennzeichnet, dass** gemäß Schritt d) von Anspruch 12 Kunststoffschmelze eingespritzt wird.

## Claims

1. Connecting rod (1), comprising
a basic body (2) which has a circular recess (3, 4) at two spaced-apart locations,
wherein an annular sleeve (5, 6) is arranged in at least one of the circular openings (3, 4), wherein the annular sleeve (5, 6) is cohesively connected to the basic body (2) by the injection of an injection-mouldable material (7) between the inner periphery (8) of the recess (3, 4) and the outer periphery (9) of the annular sleeve (5, 6), and wherein a bearing (10, 11) is inserted into the annular sleeve (5, 6).

2. Connecting rod according to Claim 1, **characterized in that** the basic body (2) is a single-piece, solid part, wherein the basic body (2) is composed preferably of light metal, in particular of aluminium.

3. Connecting rod according to Claim 1, **characterized in that** the basic body (2) is composed of at least two parts (2', 2") which are connected to one another, wherein the two parts (2', 2'') are connected to one another in particular by means of a deformation process of the material of the parts (2', 2'').

4. Connecting rod according to Claim 3, **characterized in that** the basic body (2) is composed of metal, in particular of sheet metal.

5. Connecting rod according to one of Claims 1 to 4, **characterized in that** the basic body (2) has a centring means (12), in particular in the form of at least one centring bore.

6. Connecting rod according to one of Claims 1 to 5, **characterized in that** the annular sleeve (5, 6) is slotted at one peripheral location, wherein the annular sleeve (5, 6) is composed in particular of a curved sheet-metal strip.

7. Connecting rod according to one of Claims 1 to 6, **characterized in that** the surface of the annular sleeve (5, 6) is provided at least partially with a friction-increasing coating, wherein the friction-increasing coating is composed in particular of zinc or molybdenum or has said element.

8. Connecting rod according to one of Claims 1 to 7, **characterized in that** the annular sleeve (5, 6) has means (13) for forming an axial stop for the bearing outer ring (14).

9. Connecting rod according to one of Claims 1 to 8, **characterized in that** the bearing (10, 11) is secured axially in the annular sleeve (5, 6) by means of a calking process.

10. Connecting rod according to one of Claims 1 to 9, **characterized in that** a bearing (10, 11) is inserted into one of the annular sleeves (5, 6), and **in that** a journal (15) is inserted into the other annular sleeve (5, 6), wherein in particular the journal (15) is provided at its axial ends with in each case one slide bush (16).

11. Connecting rod according to one of Claims 1 to 10, **characterized in that** the injection-mouldable material (7) is plastic.

12. Method for producing a connecting rod (1), which method has the steps:
a) producing a basic body (2), wherein a circular recess (3, 4) is formed in said basic body at two spaced-apart locations;
b) inserting the basic body (2) into an injection mould;
c) inserting in each case one annular sleeve (5, 6) into the circular recesses (3, 4);
d) injecting an injection-mouldable material (7) into the space between the inner circumference (8) of the recess (3, 4) and the outer circumference (9) of the annular sleeve (5, 6);
e) removing the basic body (2) together with cohesively connected annular sleeves (5, 6) from the injection mould;
f) inserting a bearing (10, 11) into at least one of the annular sleeves (5, 6).

13. Method according to Claim 12, **characterized in that** the basic body (2) and the annular sleeves (5, 6) are centred with respect to one another in the injection mould before step d) of Claim 12 is carried out.

14. Method according to Claim 12 or 13, **characterized in that** the bearing (10, 11) is secured axially relative to the annular sleeve (5, 6) by means of a calking process once step f) of Claim 12 has been carried out.

15. Method according to one of Claims 12 to 14, **characterized in that**, in step d) of Claim 12, a molten plastic is injected.

## Revendications

1. Bielle (1), comprenant
un corps de base (2) qui présente un évidement (3, 4) de forme circulaire en deux endroits espacés, dans au moins l'une des ouvertures circulaires (3, 4) étant disposée une douille (5, 6) de forme annulaire, la douille annulaire (5, 6) étant connectée au corps de base (2) par engagement par liaison de matière par injection d'un matériau (7) moulable par injection entre la périphérie intérieure (8) de l'évidement (3, 4) et la périphérie extérieure (9) de la douille annulaire (5, 6), et
un palier (10, 11) étant inséré dans la douille annulaire (5, 6).

2. Bielle selon la revendication 1, **caractérisée en ce que** le corps de base (2) est une pièce massive d'une seule pièce, le corps de base (2) se composant de préférence de métal léger, en particulier d'aluminium.

3. Bielle selon la revendication 1, **caractérisée en ce que** le corps de base (2) est constitué d'au moins deux parties (2', 2"), qui sont assemblées l'une à l'autre, les deux parties (2', 2") étant assemblées l'une à l'autre notamment par une opération de déformation du matériau des parties (2' 2").

4. Bielle selon la revendication 3, **caractérisée en ce que** le corps de base (2) se compose de métal, notamment de tôle.

5. Bielle selon l'une quelconque des revendications 1 à 4, **caractérisée en ce que** le corps de base (2) présente un moyen de centrage (12), notamment au moins un alésage de centrage.

6. Bielle selon l'une quelconque des revendications 1 à 5, **caractérisée en ce que** la douille annulaire (5, 6) est fendue au niveau d'une partie périphérique, la douille annulaire (5, 6) se composant notamment d'un ruban de tôle cintré.

7. Bielle selon l'une quelconque des revendications 1 à 6, **caractérisée en ce que** la surface de la douille annulaire (5, 6) est pourvue au moins en partie d'un revêtement augmentant la friction, le revêtement augmentant la friction se composant notamment de zinc ou de molybdène ou comprenant ces éléments.

8. Bielle selon l'une quelconque des revendications 1 à 7, **caractérisée en ce que** la douille annulaire (5, 6) présente des moyens (13) pour former une butée axiale pour la bague extérieure de palier (14).

9. Bielle selon l'une quelconque des revendications 1 à 8, **caractérisée en ce que** le palier (10, 11) est fixé axialement dans la douille annulaire (5, 6) par une opération de matage.

10. Bielle selon l'une quelconque des revendications 1 à 9, **caractérisée en ce qu'**un palier (10, 11) est inséré dans l'une des douilles annulaires (5, 6), et **en ce qu'**un boulon (15) est inséré dans l'autre douille annulaire (5, 6), le boulon (15) étant pourvu en particulier d'un manchon coulissant (16) à ses extrémités axiales.

11. Bielle selon l'une quelconque des revendications 1 à 10, **caractérisée en ce que** le matériau moulable par injection (7) est du plastique.

12. Procédé de fabrication d'une bielle (1), qui présente les étapes suivantes :
a) fabrication d'un corps de base (2), un évidement (3, 4) de forme circulaire étant pratiqué en deux endroits espacés ;
b) insertion du corps de base (2) dans un outil de moulage par injection ;
c) insertion d'une douille (5, 6) de forme annulaire respective dans les évidements circulaires (3, 4) ;
d) injection d'un matériau (7) moulable par injection dans l'espace entre la périphérie intérieure (8) de l'évidement (3, 4) et la périphérie extérieure (9) de la douille annulaire (5, 6) ;
e) démoulage du corps de base (2) avec les douilles annulaires (5, 6) assemblées par engagement par liaison de matière hors de l'outil de moulage par injection ;
f) insertion d'un palier (10, 11) dans au moins l'une des douilles annulaires (5, 6).

13. Procédé selon la revendication 12, **caractérisé en ce que** le corps de base (2) et les douilles annulaires (5, 6) sont centrés les uns par rapport aux autres dans l'outil de moulage par injection avant la mise en oeuvre de l'étape d) de la revendication 12.

14. Procédé selon la revendication 12 ou 13, **caractérisé en ce que** le palier (10, 11) est fixé axialement par rapport à la douille annulaire (5, 6) après la mise en oeuvre de l'étape f) de la revendication 12 par une opération de matage.

15. Procédé selon l'une quelconque des revendications 12 à 14, **caractérisé en ce que** conformément à l'étape d) de la revendication 12, du plastique en fusion est injecté.
